# EUROPÄISCHE PATENTSCHRIFT

(11) **EP 0 625 473 B1**
(45) Veröffentlichungstag und Bekanntmachung des Hinweises auf die Patenterteilung: **31.01.2001**
(21) Anmeldenummer: 94107322.3
(22) Anmeldetag: 11.05.1994
(51) Int. Cl.: B65H 18/26, B65H 23/028, B65H 23/032

(54) **Verfahren und Vorrichtung zur Vergleichmässigung der Wickelhärte eines Folienwickels**
Method and device for uniforming the winding density of a film roll
Procédé et dispositif pour uniformiser la densité de bobinage d'un rouleau de film

(30) Priorität: 17.05.1993 DE 4316383
(43) Veröffentlichungstag der Anmeldung: 23.11.1994
(73) Patentinhaber: Trespaphan GmbH, 66539 Neunkirchen (DE)
(72) Erfinder: Hartmut, Michel, D-66892 Bruchmühlbach (DE)
(74) Vertreter: Luderschmidt, Schüler & Partner GbR

(56) Entgegenhaltungen:
- DE-A- 3 516 086
- DE-A- 3 702 836
- FR-A- 2 541 257
- SOVIET PATENT ABSTRACTS Section Ch, Week 8832 21.September 1988 Derwent Publications Ltd., London, GB; Class A35, AN 88-226415 & SU-A-1 368 238 (PLASTIC WKS EQUIP) , 23.Januar 1988
- PATENT ABSTRACTS OF JAPAN vol. 10 no. 47 (M-456) [2104] ,25.Februar 1986 & JP-A-60 197554 (TORAY) 7.Oktober 1985,

## Beschreibung

Die Erfindung betrifft ein Verfahren zur Vergleichmäßigung der Wickelhärte eines Folienwickels bei dem eine längsgestreckte Vorfolie in einen Querstreckrahmen einläuft, wobei die Folienränder von den Kluppen einer Kluppenkette erfaßt werden, sowie eine Vorrichtung.

Extrudierte Folien weisen trotz ausgereifter Regelungstechnik zur Einstellung des Düsenspalts von Schlitzdüsen sogenannte Permanenzen auf. Bei diesen Permanenzen handelt es sich um Dünn-/Dickstellen, die über das Breitenprofil der Folie verteilt sind und über lange Zeitspannen hinweg immer an den gleichen Stellen des Folienbreitenprofils anzutreffen sind. Diese Permanenzen sind die Folge aus der endlichen Anzahl von Stellschrauben in der oberen Düsenlippe zum Einstellen des Düsenspalts. Diese Permanenzen sind den Abständen dieser Stellschrauben untereinander, die im allgemeinen etwa 25 mm betragen, zuzuordnen. Diese Permanenzen, die zunächst in der Vorfolie anzutreffen sind, werden auch während der Längs- und Querstreckung der Vorfolie zu der Endfolie beibehalten. Beim Aufwickeln der Endfolie zu einem Folienwickel addieren sich diese Dünn- und Dickstellen im Folienwickel und führen zu unterschiedlichen Wickelhärten über die Rollenbreite des Folienwickels. Diese unterschiedlichen Wickelhärten wiederum führen bei längeren Lagerungszeiten der Folienwickel bzw. Folienrollen zu irreparablen Verdehnungen der Folie, so daß diese unbrauchbar werden kann.

Zur Vermeidung dieser Permanenzen ist es bekannt, den Wickelkern des Folienwickels während des Aufwickelns zu changieren, d.h. über die Breite der Folienbahn hin und her zu bewegen. Die Mechanik und Steuerung für dieses Changieren des Wickelkerns ist sehr aufwendig.

Andere Maßnahmen zum Verhindern dieser Permanenzen bestehen darin, die längsgestreckte Vorfolie oszillierend in den Querstreckrahmen einzuführen, um eine Oszillation der Dünn-/Dickstellen quer zur Folienlaufrichtung zu erreichen und somit die Permmenzen gleichmäßig über die Breite des Folienwickels zu verteilen, ohne sie an bestimmten Stellen anzuhäufen. Das oszillierende Einführen der längsgestreckten Vorfolie in den Querstreckrahmen kann durch verschiedene Maßnahmen erreicht werden. Eine davon ist eine gezielte Bewegung einer Walze, beispielsweise ein Abweichen von der Horizontalen, vor den Querstreckrahmen bei gleichzeitiger Stillsetzung der Rahmeneinlaufsteuerung. Eine andere Maßnahme besteht darin, eine gezielte Vorfoliensäumung vorzunehmen, bei der in Abhängigkeit von der Lauflänge auf beiden Seiten der Folienbahn abwechselnd breite Randstreifen unter Einhaltung einer konstanten Breite der gesäumten Vorfolie abgetrennt werden. Der Verschiebung der Folienränder durch das changierende Säumen fährt die Rahmeneinlaufsteuerung nach, und dadurch kommt es zu einer oszillierenden Querverschiebung der Dünn-/Dickstellen der Vorfolie.

In Soviet Patent Abstract Section CH, Week 8832 21. September 1988 AN 88-226415 wird ein Verfahren zur Verbesserung eines Folienwickels beschrieben. Hierbei wird durch eine gezielte Relativbewegung eines Tastkopfes eine Walze über welche die Folienbahn läuft, derart verstellt, daß die Folienbahn mit ihren Dick- und Dünnstellen eine oszillierende Bewegung vor dem Aufwickeln erfährt Dadurch liegen Dick- und Dünnstellen im Folienwickel nicht mehr aufeinander.

In FR 2 541 257 A, die dem Oberbegriff der Ansprüche 1 und 8 entspricht, wird eine Streckanordnung für den Materialtransport in Form von Bändern beschrieben bestehend aus zwei Eintrittsbakken, welche eine Zuführung sein können, um die eine gegen die andere unabhängig voneinander mittels Servomotoren zu verdrehen, wobei jeder Servomotor aus einem Gehäuse für ein Getriebe zum Bedienen eines Transportmechanismus zwischen einem Steuermotor und einer oszillierenden Führung besteht, in welcher ein Ritzel mittels einer Zahnradstange angetrieben montiert ist.

Aufgabe der Erfindung ist es, die Querstreckung einer längsgestreckten Vorfolie zu einer Endfolie und deren Aufwicklung zu einem Folienwickel so zu gestalten, daß die von der Regelung der Düsenspaltbreite der Schlitzdüse verursachten Dünn-/Dickstellen der Endfolie auf dem Folienwickel nicht übereinander zu liegen kommen.

Diese Aufgabe wird durch ein Verfahren gemäß Anspruch 1 und eine Vorrichtung gemäß Anspruch 8 gelöst.

In Ausgestaltung des Verfahrens sind an den beiden Tastkopfhaltern motorisch verstellbare Einstellschrauben vorhanden, deren Verstellung elektronisch geregelt wird. Bevorzugt werden die Tastköpfe bei ihrer motorischen Verstellung oszillierend bewegt.

Die weitere Ausgestaltung des Verfahrens ergibt sich aus den Merkmalen der Ansprüche 5 bis 7.

In Weiterbildung der Vorrichtung ist jeder der Tastköpfe mit einem Servoventil verbunden, das ein Signal des Tastkopfes ansteuert, ausgelöst durch eine Verschiebung der Folienränder der Vorfolie. Die weitere Ausgestaltung der Vorrichtung ergibt sich aus den Merkmalen der Ansprüche 10 bis 12.

Mit der Erfindung wird der Vorteil erzielt, daß durch eine gezielte Relativverstellung der Tastköpfe der Rahmeneinlaufsteuerung gegenüber den Kettenbahnumlenkköpfen die Faßtiefe der Folie durch die Kluppen in der Kluppenkette gesteuert wird. Da diese Relativverstellung definiert zeitabhängig an beiden Tastköpfen gleichsinnig quer zur Laufrichtung der Folie erfolgt, d.h. die Tastköpfe gemeinsam nach rechts oder links verstellt werden, verursacht dieses zunächst ein Oszillieren der Kettenbahnumlenkköpfe und eine Veränderung des Bahnverlaufs der Kluppenketten und nach der ersten feststehenden Spindel der Kluppenkettenbahn ein Oszillieren der Folie.

Die Erfindung wird im folgenden anhand der Zeichnungen näher erläutert. Es zeigen:
- Figur 1: schematisch ein Rollenprofil eines Folienwickels mit Dünn-/Dickstellen (Permanenzen),
- Figur 2: eine Seitenansicht eines Tastkopfes mit einer Einstelleinrichtung zum seitlichen Verstellen des Tastkopfes,
- Figur 3: eine schematische Draufsicht auf eine Einlaufsteuerung für einen Querstreckrahmen zum Changieren einer längsgestreckten Vorfolie, und
- Figur 4: einen Schnitt durch eine Kluppenkette und den daran angebrachten Kluppen mit zwei unterschiedlichen Faßtiefen der Kluppen

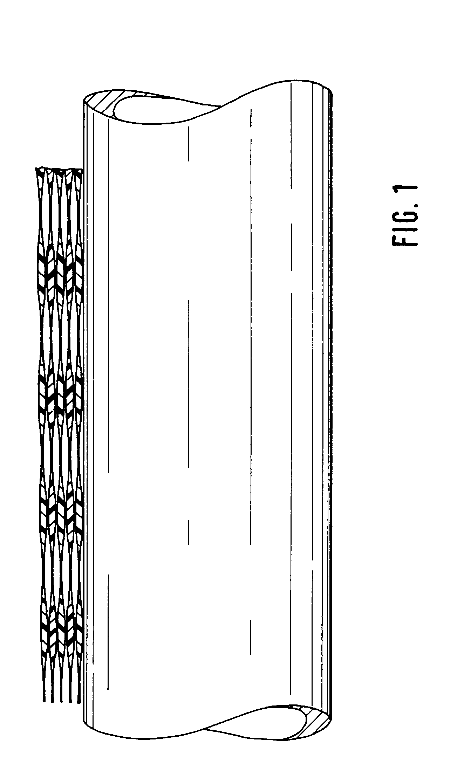

In Figur 1 sind schematisch Dünn-/Dickstellen, verteilt über die Breite eines Folienwickels, dargestellt. Diese Dünn- und Dickstellen sind keineswegs gleichmäßig über die Breite des Folienwickels verteilt, ihre Positionen hängen vielmehr davon ab, wie die Stellschrauben der Düsenlippe der Schlitzdüse eingestellt sind, nämlich ob diese Zug oder Druck auf die Düsenlippe ausüben. Eine Dickstelle entsteht in der Vorfolie an der Stelle, an der eine Stellschraube der Düsenlippe der Schlitzdüse auf Zug eingestellt ist, während eine Dünnstelle einer Position entspricht, an der eine Stellschraube Druck auf die Düsenlippe ausübt. Bekannterweise werden die Stellschrauben einer Schlitzdüse so eingestellt, daß die extrudierte Vorfolie in der Mitte dicker als an den Rändern ist, da die Querstreckung der Vorfolie aus der Mitte heraus erfolgt, um letztendlich eine Endfolie mit einem gleichmäßigen Dickenprofil über die Folienbreite und -länge zu erhalten.

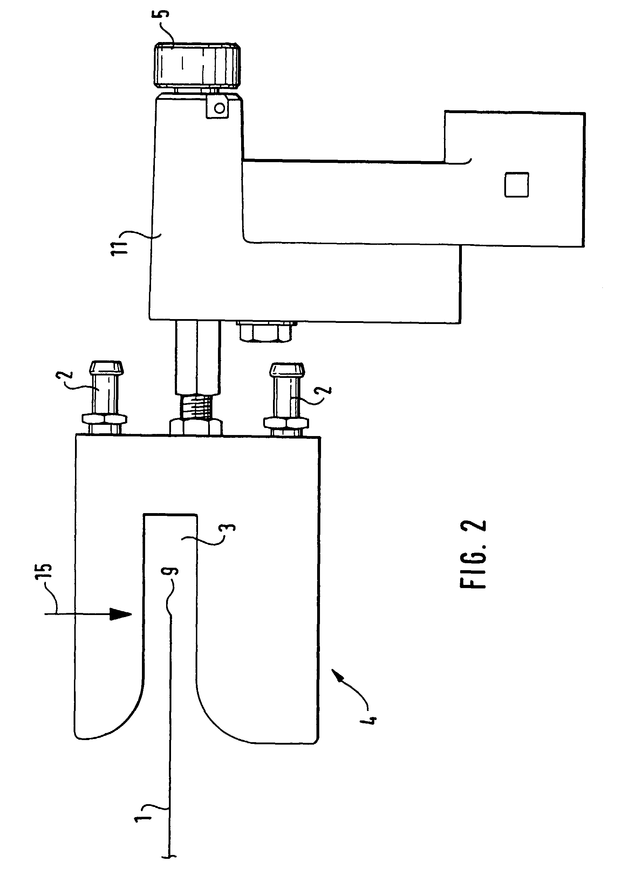

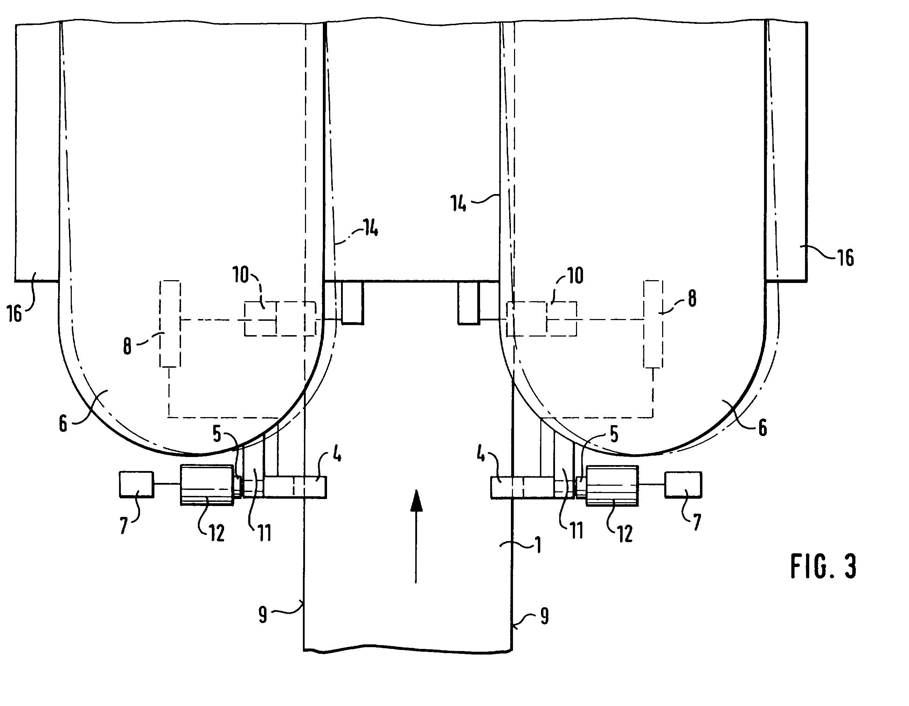

Figur 2 zeigt einen Tastkopf 4 für die Steuerung eines Folienrandes 9 einer Folienbahn 1. Die Steuerung befindet sich am Eingang eines Querstreckrahmens 16 (vgl. Fig. 3) und dient der Verstellung eines Kettenbahnumlenkkopfes 6, um letztendlich die Folienbahn 1 zum Oszillieren zu bringen, wie nachstehend noch näher beschrieben werden wird.

Der Tastkopf 4 weist einen Spalt 3 auf, durch dessen Mitte die Folienbahn 1 hindurchläuft. Um die Folienbahn 1 in der Mitte des Spaltes 3 zu halten, ist zweckmäßigerweise eine Stützstange oder -walze vor dem Tastkopf installiert. Eine solche Führung der Folienbahn 1 ist bei welligen Folienrändern ebenfalls angebracht, um ein Schleifen und Flattern der Folienbahn im Tastkopf zu vermeiden. Ebenso ist es möglich, daß die Folienbahn über die Gabel des Tastkopfes, die der Blasluftseite gegenüberliegt, leicht schleift, d.h. der Tastkopf 4 stützt die Folienbahn 1 ab, um ein Flattern der Folienbahn 1 zu vermeiden. Die Folienbahn 1 im Spalt 3 wird mit Blasluft 15 beaufschlagt, die ein genaues Abtasten des Folienrandes 9 ermöglicht. Weicht die Folienbahn 1 von ihrer Sollage nach links oder rechts ab, so trifft die Blasluft 15 entweder voll, proportional zur Abweichung von der Sollage, oder überhaupt nicht auf einen Sensor im Tastkopf 4 auf, der entsprechend proportional zu der empfangenen Blasluft 15 über einen seiner beiden Anschlüsse 2 und die zugehörige Leitung ein pneumatisches Signal an ein Servoventil 8 leitet, das ein der Abweichung proportionales Signal über Hydraulikleitungen an Stellzylinder 10 leitet, welche die Kettenbahnumlenkköpfe 6 verstellen. Eine Einstellschraube 5 durchsetzt einen Tastkopfhalter 11 und ist im Eingriff mit dem Tastkopf 4, um diesen horizontal verstellen zu können. Darüberhinaus kann der Tastkopf 4 vertikal verstellt werden, um unterschiedlich hoch angeordnete Folienbahnen durch den Spalt 3 hindurchführen zu können.

Anhand von Figur 3 wird eine Einlaufsteuerung für den Querstreckrahmen 16 zum Changieren der Folienbahn 1, bei der es sich um eine nach der Extrusion längsgestreckte Vorfolie handelt, näher beschrieben. Die Einlaufsteuerung umfaßt zwei Tastköpfe 4, 4, Schrittmotoren 12, 12, Regeleinrichtungen 7, 7 und Stellzylinder 10, 10, die über Servoventile 8, 8 mit den Tastköpfen 4, 4 verbunden sind. Die Folienränder 9, 9 werden von den beiden Tastköpfen 4, 4 abgetastet. Jeder Tastkopf 4 wird von dem zugehörigen Schrittmotor 12, der die Einstellschraube 5 des Tastkopfes antreibt, quer zur Längsrichtung der Folienbahn 1 verstellt. Die Schrittmotoren 12, 12 laufen synchron und werden entweder von einer gemeinsamen Regeleinrichtung (nicht dargestellt) oder von je einer Regeleinrichtung 7 so angesteuert, daß sie die Tastköpfe 4, 4 zeitabhängig um eine bestimmte Distanz nach links oder rechts verschieben. Dabei werden die Tastköpfe 4, 4 mit einer Geschwindigkeit von 1 bis 2 mm pro Minute verstellt. Der Gesamtweg für die Verstellung der Tastköpfe 4, 4 beträgt etwa bis zu 15 mm. Die Tastköpfe 4, 4 sind mit den Servoventilen 8, 8 verbunden, die ihrerseits von den Signalen der Tastköpfe 4, 4 angesteuert werden. Wie zuvor bei der Beschreibung der Figur 2 ausgeführt wurde, werden die Signale der Tastköpfe 4, 4 durch eine Verschiebung der Folienränder 9, 9 der Folienbahn 1 ausgelöst. Jedes Servoventil 8 ist mit einem Stellzylinder 10 verbunden, der von dem Signal des zugehörigen Servoventils angesteuert wird. Die Stellzylinder 10, 10 sind mit den Kettenbahnumlenkköpfen 6, 6 verbunden und stellen diese den Verschiebungen der Folienränder 9, 9 nach. Die Einlaufsteuerung dient somit dazu, die Kettenbahnumlenkköpfe 6, 6 am Eingang des Querstreckrahmens 16 der Bewegung der Folienbahn 1 nachzufahren.

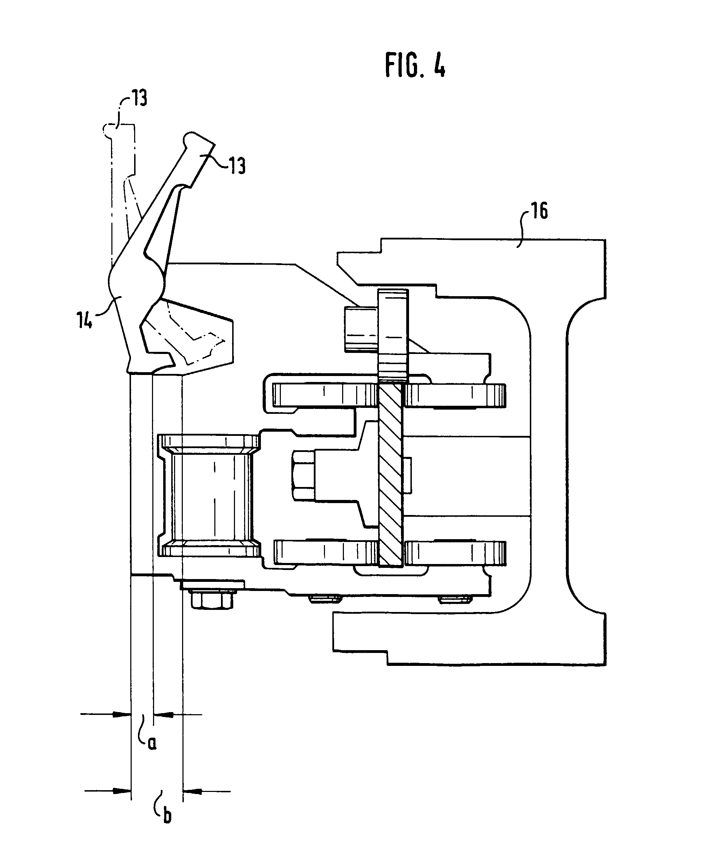

Wie aus Figur 4 ersichtlich ist, ändert sich die Faßtiefe von Kluppen 13, die an Kluppenketten 14, 14 angebracht sind, wenn die Kettenbahnumlenkköpfe 6, 6 verstellt werden und dadurch auch die Bahnen der Kluppenketten 14, 14, die um die Kettenbahnumlenkköpfe herumgeführt sind. Unter Faßtiefe a bzw. b ist die Breite der von den Kluppen 13 festgehaltenen Streifen der Folienbahn 1 zu verstehen. Jeder dieser Streifen wird von dem Folienrand 9 und der Vorderkante der geschlossenen Kluppen begrenzt. Durch die Betätigung der Einstellschrauben 5, 5 wird eine Relativbewegung zwischen den Kettenbahnumlenkköpfen 6, 6 und den Tastköpfen 4, 4 erzeugt. Die Verstellung der Kettenbahnumlenkköpfe 6, 6 bewirkt auch eine Verstellung der Bahn der Kluppenketten 14, 14 und somit auch eine Veränderung der Faßtiefe der geschlossenen Kluppen 13.

Mit Hilfe der Schrittmotoren 12, 12, die die Einstellschrauben 5, 5 verstellen, zusammen mit der elektronischen Regeleinrichtung 7, die eine Istwerterfassung für die Tastköpfe 4, 4 besitzt, werden die Tastköpfe 4, 4 oszillierend bewegt, worunter zu verstehen ist, daß sie gemeinsam entweder nach links oder nach rechts, quer zur Längsrichtung der Folienbahn 1 verschoben werden. Die jeweilige Verstellung nach rechts und nach links der Tastköpfe 4, 4 bewirkt nachfolgend zunächst eine Verschiebung bzw. ein Oszillieren der Kettenbahnumlenkköpfe 6, 6 und anschließend nach der ersten feststehenden Spindel der Kluppenbahnen ein Oszillieren der Folienbahn 1.

Anstelle der Einstellschrauben mit den Schrittmotoren können auch Tastköpfe vorgesehen werden, die sich auf Gleitschienen bewegen und deren Verstellung bzw. Oszillieren durch Hydraulik- oder Pneumatikzylinder erfolgt.

Durch das Oszillieren der Folienbahn 1 um etwa 1 bis 2 mm pro Minute nach dem Einlaufen in den Querstreckrahmen 16 wird erreicht, daß beim Aufwickeln der Endfolie die Dünn- und Dickstellen der einzelnen Folienlagen nicht übereinander zu liegen kommen, sondern jeweils in Querrichtung des Folienwickels zueinander versetzt sind.

## Patentansprüche

1. Verfahren zur Vergleichmäßigung der Wickelhärte eines Folienwickels bei dem eine längsgestreckte Vorfolie in einen Querstreckrahmen einläuft, welcher zwei Kluppenketten aufweist, die um Kettenbahnumlenkköpfe herumgeführt sind, so daß die Folienränder von den Kluppen der Kluppenketten erfaßt werden, wobei am Eingang des Querstreckrahmens ein jeweils an jedem Folienrand vorgesehener Tastkopf den Folienrand abtastet und die Kettenbahnumlenkköpfe am Eingang des Querstreckrahmens der Bewegung der Folienbahn nachgefahren werden, dadurch gekennzeichnet, daß die Tastköpfe quer zur Längsrichtung der Folienbahn und gegenüber den Kettenbahnumlenkköpfen verstellt werden und daß die Verstellung der Tastköpfe geregelt wird, so daß die Positionen der Kluppen zusammen mit den Kluppenketten so verstellt werden, daß sich die Faßtiefe der Kluppen ändert.

2. Verfahren nach Anspruch 1, dadurch gekennzeichnet, daß die Faßtiefen der Kluppen für die Randbereiche der Folienbahn beidseitig zeitabhängig gesteuert werden.

3. Verfahren nach Anspruch 1, dadurch gekennzeichnet, daß an den beiden Tastkopfhaltern motorisch verstellbare Einstellschrauben vorhanden sind, deren Verstellung elektronisch geregelt wird.

4. Verfahren nach Anspruch 3, dadurch gekennzeichnet, daß die Tastköpfe bei ihrer motorischen Verstellung oszillierend bewegt werden.

5. Verfahren nach Anspruch 2, dadurch gekennzeichnet, daß durch die oszillierende Verschiebung der Kettenbahnumlenkköpfe die Faßtiefen der Kluppen geändert werden und daß nach einer feststehenden ersten Spindel der Kettenbahn die Folienbahn oszilliert.

6. Verfahren nach Anspruch 3, dadurch gekennzeichnet, daß die Tastköpfe mit einer Geschwindigkeit von 1 bis 2 mm/min gegenüber den Kettenhahnumlenkköpfen verstellt werden.

7. Verfahren nach Anspruch 6, dadurch gekennzeichnet, daß der Gesamtweg für die Verstellung der Tastköpfe bis zu 15 mm beträgt.

8. Vorrichtung zur Vergleichmäßigung der Wickelhärte eines Folienwickels mit einem Querstreckrahmen (16) welcher zwei Kluppenketten (14), die um Kettenbahnumlenkköpfe (6) herumgeführt sind, und Kluppen (13) zum Erfassen der Folienrändern (9) aufweist, wobei sich am Eingang des Querstreckrahmens (16) eine Steuerung befindet, mit einem Tastkopf (4) an jedem Folienrand (9) zum Abtasten der Folienränder (9), durch welche die Kettenbahnumlenkköpfe (6) am Eingang des Querstreckrahmens (16) der Bewegung der Folienbahn (1) nachgefahren werden, dadurch gekennzeichnet, daß jeder der Tastköpfe (4) durch eine Verstellvorrichtung (5, 12) quer zur Längsrichtung der Folienbahn (1) und gegenüber den Kettenbahnumlenkköpfen (6) verstellt wird und daß die Verstellung der Tastköpfe (4) durch eine Regeleinrichtung (7) geregelt wird, so daß die Positionen der Kluppen (13) zusammen mit den Kluppenketten (14) so verstellt werden, daß sich die Faßtiefe der Kluppen (13) ändert.

9. Vorrichtung nach Anspruch 8, dadurch gekennzeichnet, daß die Tastköpfe (4, 4) eine verstellbare Einstellschraube (5, 5) aufweisen, wobei der Tastkopf (4, 4) durch die Verstellung der Einstellschraube (5, 5) quer zur Folienbahn (1) verschoben werden kann und die Verstellung der Einstellschraube (5, 5) mittels der Regeleinrichtung (7) erfolgt.

10. Vorrichtung nach Anspruch 9, dadurch gekennzeichnet, daß jeder der Tastköpfe (4, 4) mit einem Servoventil (8, 8) verbunden ist, das ein Signal des Tastkopfes (4) ansteuert, ausgelöst durch eine Verschiebung der Folienränder (9, 9) der Folienbahn (1).

11. Vorrichtung nach Anspruch 10, dadurch gekennzeichnet, daß jedes der beiden Servoventile (8) mit je einem Stellzylinder (10) verbunden ist, daß die Signale der Servorventile die Stellzylinder ansteuern und daß die Stellzylinder (10, 10) die Kettenbahnumlenkköpfe (6, 6) entsprechend den Verschiebungen der Folienränder (9, 9) nachstellen.

12. Vorrichtung nach Anspruch 9, dadurch gekennzeichnet, daß die einzelne Einstellschraube (5) durch einen Tastkopfhalter (11) hindurchgeführt ist und daß die Verstellung der einzelnen Einstellschraube (5) mittels eines Schrittmotors (12) erfolgt, der mit der Einstellschraube verbunden ist und den die Regeleinrichtung (7) ansteuert.

## Claims

1. Process for homogenising the winding hardness of a film reel, in which a longitudinally stretched prefilm enters a transverse stretching frame having two dip chains which are guided around chain-path deflector heads, so that the film edges are grasped by the clips of the dip chains, wherein at the entrance to the transverse stretching frame a sensor head provided at each film edge senses the film edge and the chain-path deflector heads at the entrance to the transverse stretching frame are driven following the movement of the film web, characterised in that the sensor heads are displaced transversely to the longitudinal direction of the film web and with respect to the chain-path deflector heads, and in that the displacement of the sensor heads is controlled, so that the positions of the dips together with the dip chains are so adjusted that the grasping depth of the dips changes.

2. Process according to claim 1, characterised in that the grasping depths of the dips for the edge regions of the film web are controlled as a function of time on both sides.

3. Process according to daim 1, characterised in that there are present on the two sensor-head holders motor-adjustable setting screws whose adjustment is controlled electronically.

4. Process according to claim 3, characterised in that the sensor heads are moved in an oscillating manner during their motor adjustment.

5. Process according to claim 2, characterised in that the grasping depths of the dips are adjusted by the oscillating displacement of the chain-path deflector heads, and in that downstream of a first fixed spindle of the chain path, the film web osdllates.

6. Process according to claim 3, characterised in that the sensor heads are displaced at a rate of from 1 to 2 mm/minute with respect to the chain-path deflector heads.

7. Process according to claim 6, characterised in that the overall path for the displacement of the sensor heads is up to 15 mm.

8. Device for homogenising the winding hardness of a film reel, having a transverse stretching frame (16) having two clip chains (14) which are guided around chain-path deflector heads (6), and clips (13) for grasping the film edges (9), wherein there is located at the entrance to the transverse stretching frame (16) a control having a sensor head (4) at each film edge (9) for sensing the film edges (9), by means of which control the chain-path deflector heads (6) at the entrance to the transverse stretching frame (16) are driven following the movement of the film web (1), characterised in that each of the sensor heads (4) is displaced by means of a displacement device (5, 12) transversely to the longitudinal direction of the film web (1) and with respect to the chain-path deflector heads (6), and in that the displacement of the sensor heads (4) is controlled by means of a control device (7), so that the positions of the dips (13) together with the clip chains (14) are so adjusted that the grasping depth of the dips (13) changes.

9. Device according to claim 8, characterised in that the sensor heads (4, 4) have an adjustable setting screw (5, 5), it being possible for the sensor head (4, 4) to be displaced transversely to the film web (1) by the adjustment of the setting screw (5, 5) and the adjustment of the setting screw (5, 5) being carried out by means of the control device (7).

10. Device according to claim 9, characterised in that each of the sensor heads (4, 4) is connected to a servo valve (8, 8) which is activated by a signal of the sensor head (4), initiated by a displacement of the film edges (9, 9) of the film web (1).

11. Device according to claim 10, characterised in that each of the two servo valves (8) is connected to a positioning cylinder (10), in that the signals of the servo valves activate the positioning cylinders, and in that the positioning cylinders (10, 10) adjust the chain-path deflector heads (6, 6) according to the displacements of the film edges (9, 9).

12. Device according to claim 9, characterised in that the individual setting screw (5) passes through a sensor-head holder (11) and in that the adjustment of the individual setting screw (5) is carried out by means of a stepping motor (12) which is connected to the setting screw and is activated by the control device (7).

## Revendications

1. Procédé pour l'égalisation de la dureté d'un rouleau de feuille, dans lequel une feuille préliminaire soumise à un étirage en direction longitudinale pénètre dans un cadre d'étirage en direction transversale qui présente deux chaînes à pinces qui sont guidées autour de têtes de renvoi de transporteur à chaîne, de telle sorte que les bords de la feuille sont saisis par les pinces des chaînes à pinces, dans lequel à l'entrée du cadre d'étirage en direction transversale, un palpeur prévu respectivement sur chaque bord de feuille palpe le bord de la feuille et les têtes de renvoi du transporteur à chaîne à l'entrée du cadre d'étirage en direction transversale suivent le mouvement de la feuille continue, caractérisé en ce que les palpeurs se déplacent transversalement par rapport à la direction longitudinale de la feuille continue et par rapport aux têtes de renvoi du transporteur à chaîne et en ce que le déplacement des palpeurs est réglé de telle sorte que les positions des pinces se déplacent de manière conjointe avec les chaînes à pinces, de telle sorte que la profondeur de saisie des pinces se modifie.

2. Procédé selon la revendication 1, caractérisé en ce que les profondeurs de saisie des pinces pour les zones marginales de la feuille continue sont réglées des deux côtés en fonction du temps.

3. Procédé selon la revendication 1, caractérisé en ce qu'on prévoit sur les deux supports de palpeurs des vis de réglage aptes à être réglées à l'aide d'un moteur, dont le réglage est réalisé par voie électronique.

4. Procédé selon la revendication 3, caractérisé en ce que les palpeurs sont soumis à un mouvement oscillant lors de leur déplacement motorisé.

5. Procédé selon la revendication 2, caractérisé en ce que les profondeurs de saisie des pinces sont modifiées via le déplacement oscillant des têtes de renvoi du transporteur à chaîne et en ce que la feuille continue oscille après une première broche fixe du transporteur à chaîne.

6. Procédé selon la revendication 3, caractérisé en ce que les palpeurs se déplacent à une vitesse de 1 à 2 mm/min. par rapport aux têtes de renvoi du transporteur à chaîne.

7. Procédé selon la revendication 6, caractérisé en ce que la course totale pour le déplacement des palpeurs s'élève jusqu'à 15 mm.

8. Dispositif pour l'égalisation de la dureté d'un rouleau de feuille comprenant un cadre d'étirage en direction transversale (16) qui présente deux chaînes à pinces (14) qui sont guidées autour de têtes de renvoi de transporteur à chaîne (6) et des pinces (13) pour saisir les bords (9) de la feuille, dans lequel une commande est disposée à l'entrée du cadre d'étirage en direction transversale (16), comprenant un palpeur (4) à chaque bord (9) de la feuille pour palper les bords (9) de la feuille, par lequel les têtes de renvoi (6) du transporteur à chaîne à l'entrée du cadre d'étirage en direction transversale (16) suivent le mouvement de la feuille continue (1), caractérisé en ce que chaque palpeur (4) se déplace via un dispositif de déplacement (5, 12) transversalement par rapport à la direction longitudinale de la feuille continue (1) et par rapport aux têtes de renvoi (6) du transporteur à chaîne et en ce que le déplacement des palpeurs (4) est réglé via un mécanisme de réglage (7), si bien que les positions des pinces (13) se déplacent de manière conjointe avec les chaînes à pince (14) de telle sorte que la profondeur de saisie des pinces (13) se modifie.

9. Dispositif selon la revendication 8, caractérisé en ce que les palpeurs (4, 4) présentent une vis de réglage (5, 5) apte à se déplacer, le palpeur (4, 4) pouvant se déplacer transversalement par rapport à la feuille continue (1) via le déplacement de la vis de réglage (5, 5) et le déplacement de la vis de réglage (5, 5) ayant lieu à l'aide du mécanisme de réglage (7).

10. Dispositif selon la revendication 9, caractérisé en ce que chaque palpeur (4, 4) est relié à une servo-soupape (8, 8) qui commande un signal du palpeur (4) déclenché par un déplacement des bords (9, 9) de la feuille continue (1).

11. Dispositif selon la revendication 10, caractérisé en ce que chacune des deux servo-soupapes (8) est reliée respectivement à un cylindre de réglage (10), en ce que les signaux des servo-soupapes commandent les cylindres de réglage et en ce que les cylindres de réglage (10, 10) règlent ultérieurement les têtes de renvoi (6, 6) du transporteur à chaîne conformément aux déplacements des bords (9, 9) de la feuille.

12. Dispositif selon la revendication 9, caractérisé en ce que la vis de réglage individuelle (5) est traversée par un support de palpeur (11) et en ce que le déplacement de la vis de réglage individuelle (5) a lieu à l'aide d'un moteur pas à pas (12) qui est relié à la vitesse de réglage et qui commande le mécanisme de réglage (7).
